(19) Europäisches Patentamt
European Patent Office
Office européen des brevets

(11) EP 4 037 180 A1

(12) EUROPÄISCHE PATENTANMELDUNG

(43) Veröffentlichungstag:
03.08.2022  Patentblatt 2022/31

(51) Internationale Patentklassifikation (IPC):
H02P 6/182 (2016.01)

(21) Anmeldenummer: 22152339.2

(52) Gemeinsame Patentklassifikation (CPC):
H02P 6/182

(22) Anmeldetag: 20.01.2022

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(30) Priorität: 28.01.2021  BE 202105063

(71) Anmelder: Miele & Cie. KG
33332 Gütersloh (DE)

(72) Erfinder:
• Neufeld, Alexander
33619 Bielefeld (DE)
• Sammoud, Hafedh
8090 Kelibia (TN)
• Rodehüser, Tobias
59329 Wadersloh (DE)

(54) **VERFAHREN ZUM ANSTEUERN EINES MINDESTENS ZWEIPHASIGEN BÜRSTENLOSEN MOTORS**

(57) Die Erfindung betrifft ein Verfahren zum Ansteuern eines mindestens zweiphasigen bürstenlosen Motors (M), vorzugsweise ohne Rotorlagesensor, mit wenigstens den Schritten:
• Bestromen (100) von mindestens einer Phase (U, V, W), wobei die Phasenspannung ($U_{Phase}$) des Bestromens (100) vorzugsweise mittels PWM-Steuerung eingestellt wird,
• Unterbrechen (200), zu einem vorbestimmten Zeitpunkt für einen vorbestimmten Zeitraum, des Bestromens (100) aller Phasen (U, V, W),
• Ermitteln (300a) der Phasenspannung ($U_{Phase}$) der nicht-bestromten Phase (U, V, W) innerhalb des vorbestimmten Zeitraums,
• Ermitteln (300b) einer Sternpunktspannung innerhalb des vorbestimmten Zeitraums,
• Bestimmen (400) der Elektromotorischen Kraft (EMK) der nicht-bestromten Phase (U, V, W) während des Unterbrechens (200) aus der Differenz zwischen der ermittelten Phasenspannung ($U_{Phase}$) und der ermittelten Sternpunktspannung,
• Bestimmen (500) der Rotorlage basierend auf der bestimmten Elektromotorischen Kraft (EMK) der nicht-bestromten Phase (U, V, W), und
• Fortsetzen (600) des Bestromens (100) der Phasen (U, V, W) basierend auf der bestimmten Rotorlage.

FIG. 3

**Beschreibung**

Die Erfindung betrifft ein Verfahren zum Ansteuern eines mindestens zweiphasigen bürstenlosen Motors gemäß dem Patentanspruch 1, eine Ansteuerungsvorrichtung zum Ansteuern eines mindestens zweiphasigen bürstenlosen Motors gemäß dem Patentanspruch 6, einen mindestens zweiphasigen bürstenlosen Motor mit einer derartigen Ansteuerungsvorrichtung gemäß dem Patentanspruch 7 sowie ein Haushaltsgerät mit mindestens einem derartigen mindestens zweiphasigen bürstenlosen Motor gemäß dem Patentanspruch 8.

Zu den elektrischen Antrieben gehören die Synchronmotoren als Einphasen- oder Drehstrom-Synchronmaschinen im Motorbetrieb. Der Rotor bzw. der Läufer weist eine konstante Magnetisierung auf, welche im Betrieb synchron von einem bewegten magnetischen Drehfeld im Stator mitgenommen wird, woraus sich die Dreh- bzw. Rotationsbewegung des Rotors innerhalb des Stators bzw. Ständers ergibt. Mit anderen Worten wird die, üblicherweise dreisträngige, Drehstromwicklung des Stators durch eine geeignete Schaltung derart angesteuert, dass seitens der Spulen des Stators ein wanderndes magnetisches Feld erzeugt wird, welches den Rotor mitzieht und hierdurch in Rotation versetzt. Die Dreh- bzw. Rotationsbewegung des Rotors des laufenden Synchronmotors ist dabei synchron zur Wechselspannung der Wicklungen des Stators. Die Drehzahl der Drehbewegung des Rotors ist über die Polpaarzahl der Wicklungen des Stators mit der Frequenz der Wechselspannung verknüpft.

Zum anderen kann das magnetische Feld des Rotors durch Permanentmagnete erzeugt werden, was als Selbsterregung bezeichnet wird. In diesem Fall kann auf die elektrische Kontaktierung zwischen Stator und Rotor verzichtet werden. Dies kann die zuvor genannten Nachteile vermeiden sowie insgesamt das Gewicht, den Bauraum und die Kosten derartiger permanenterregter Synchronmotoren geringhalten. Derartige permanenterregte Synchronmotoren mit einer schaltenden Elektronik werden daher üblicherweise auch als bürstenlose Motoren (Englisch: brushless direct current motor - kurz: BLDC-Motor) bezeichnet. Die Spulenstränge des Stators können über einen Vierquadrantensteller angesteuert werden. Die Elektronik zur Ansteuerung der Brücke ist ein geregelter Frequenzumrichter. Üblicherweise werden bürstenlose Motoren dreiphasig ausgebildet, da sie dann den Vorteil einer definierten Läuferstellung bei hoher Dynamik, hohem Drehmoment und hoher Effizienz aufweisen.

Charakteristisch für bürstenlose Motoren ist ihre Kommutierung, welche zum Beispiel bei einem dreiphasigen Stator aus sechs Blöcken bzw. Sektoren pro Drehfelddurchlauf, d.h. pro Motorumdrehung, besteht, welche sich jeweils vom Schaltzustand der Brückenschaltung unterscheiden. Dabei sind immer lediglich zwei Gegentaktstufen der Brücke aktiv und die dritte Gegentaktstufe befindet sich im Zustand "floating". Die Spannung an diesem Brückenpunkt wird durch das Schaltungsnetz gemäß dem Stern-Ersatzschaltbild definiert. Die Brückensteuerung sorgt dafür, dass immer die Motorphase "floating" ist, welche - bei trapezoider Gegenspannung - gerade die Polarität wechselt.

Da die Brückensteuerung automatisch weiterschaltet, befindet sich das Statorfeld immer in dem Block mit der optimalen Magnetflussänderung, d.h. mit der maximalen Generatorspannung. Der bürstenlose Motor dreht somit hoch, bis seine Generatorspannung der Versorgungsspannung entspricht. Dann ist die maximale Drehzahl bzw. die Betriebsdrehzahl erreicht und wird konstant gehalten. Eine Steuerung bzw. Änderung der Drehzahl des Rotors kann somit über die Änderung der Versorgungsspannung erfolgen.

Die Steuerung der Kommutierung erfolgt in Abhängigkeit der aktuellen Rotorposition, welche über wenigstens einen Positionssensor zum Beispiel als Hall-Sensor erfasst werden kann, was jedoch zu einem entsprechenden zusätzlichen Aufwand bzw. zu entsprechenden Kosten führt sowie Bauraum erfordert.

Alternativ kann daher eine sensorlose Kommutierung umgesetzt und auf Positionssensoren verzichtet werden, indem die aktuelle Rotorposition indirekt durch die Messung von elektrischen Parametern an den Spulen gewonnen wird. Hierzu kann beispielsweise die in den Spulen des Stators ausgelöste EMK (elektromotorische Kraft) erfasst und von der elektronischen Steuerschaltung ausgewertet werden, was jedoch erst ab einer gewissen Mindestdrehzahl erfolgen kann.

Mit anderen Worten ist ein bürstenloser Motor (BLDC-Motor) konstruktiv gesehen eine Drehfeldmaschine, welche keinen mechanischen Kommutator benötigt. Der Rotor beinhaltet einen oder mehrere Permanentmagnete. Durch die Wechselwirkung zwischen Statorfeld und Rotorfeld entsteht ein elektrisches Moment, das zu einer Rotation führen kann.

Zum Betrieb eines bürstenlosen Motors ist üblicherweise ein Motorumrichter notwendig. Der Motorumrichter beinhaltet üblicherweise im Wesentlichen ein Controller sowie Leistungshalbleiter zur Ansteuerung der Motorphasen. Außerdem ist üblicherweise ein Zwischenkreis vorhanden, aus dem der bürstenlose Motor gespeist wird.

Anders als die unter dem Begriff permanenterregte Synchron-Maschinen (PMSM) oder PMAC bekannten Motoren werden bei einem bürstenlosen Motor z.B. jeweils nur zwei Phasen von drei gleichzeitig bestromt und die dritte Phase ist stromlos. Die Auswahl der zu bestromenden Phasen ist von der Rotorlage abhängig. Der Übergang von einem Sektor bzw. Block zum nächsten wird auch "elektronische Kommutierung" genannt; deswegen auch die Bezeichnung "brushless" oder "elektronisch kommutiert". Die für die Kommutierung eines bürstenlosen Motors notwendige Information über die Rotorlage wird üblicherweise über einen Lagesensor wie beispielsweise Hall-Sensoren, Resolver oder Inkrementalgeber gemessen.

Aus dem Stand der Technik sind verschiedene Lösungen bekannt, die diese Kommutierung ohne einen Lagesensor erlauben. Der am meisten verbreitete Ansatz der sensorlosen Ansteuerung basiert darauf, die Rotorlage und die Kommutierungszeitpunkte durch Messung der induzierten Spannung in der inaktiven Phase zu ermitteln. Die Spannungspotenziale der Motorphase und des Motorsternpunkts werden über Spannungsteiler miteinander verglichen und der Nullübergang wird als Referenzzeitpunkt für die Kommutierung genommen.

Bei bürstenlosen Motoren, bei denen der Sternpunkt nicht physikalisch herausgeführt ist (etwa bei einer Dreieck-Schaltung), kann ein Sternpunkt künstlich durch drei in Stern geschaltete Widerstände nachgebildet werden. Das Spannungspotential des künstlichen Sternpunkts wird dann anschließend mit dem Spannungspotential der inaktiven Phase, zum Beispiel über einen Komparator, verglichen. Der Nulldurchgang dieser Differenz wird als Referenzzeitpunkt für die Kommutierung genommen.

Bei einem optimal kommutierten bürstenlosen Motor sollen der Phasenstrom und die elektromotorische Kraft (EMK) in Phase sein, damit ein maximales Verhältnis der Leistung zum Stromeffektivwert erreicht wird. Dieses Kriterium bedeutet, dass der Nulldurchgang der EMK einer Phase etwa in der Mitte des stromlosen Intervalls erfolgen soll (unter der Annahme einer kleinen Verzögerung zwischen Spannung und Strom in der Phase). Bei der herkömmlichen Ansteuerung ist dies nicht ohne weiteres gegeben.

Die DE 102017 117 109 A1 beschreibt ein Verfahren zur Ansteuerung eines mindestens zweiphasigen bürstenlosen Motors, bevorzugt ohne Rotorlagesensor, umfassend:

- Bestromen von zwei Phasen, wobei die Spannung des Bestromens mittels PWM-Steuerung eingestellt wird;

- Ermitteln der induzierten Spannung einer nicht bestromten Phase;

- Anpassen der PWM-Frequenz, falls die induzierte Spannung ungleich Null ist, wobei

  o die PWM-Frequenz erhöht wird, falls die induzierte Spannung bei positivem Nulldurchgang < 0; oder die induzierte Spannung bei negativem Nulldurchgang > 0; und
  o die PWM-Frequenz verringert wird, falls die induzierte Spannung bei positivem Nulldurchgang > 0; oder die induzierte Spannung bei negativem Nulldurchgang < 0.

Somit wird die induzierte Spannung verwendet, um auf den Zustand der Kommutierung zu schließen. Abhängig davon kann über die Änderung der PWM-Frequenz entsprechend geregelt werden, um den Nulldurchgang der induzierten Spannung bzw. der elektromotorischen Kraft mit der Mitte des stromlosen Intervalls zu synchronisieren. Damit werden Phasenstrom und EMK in Phase gehalten und das Verhältnis der Leistung zum Stromeffektivwert wird maximiert.

Mit anderen Worten wird bei dem sensorlosen Regelungsverfahren der DE 10 2017 117 109 A1 der Kommutierungszeitpunkt bzw. die Ermittlung der Rotorposition durch Messung einer Phasenspannung und der Sternpunktspannung in der unbestromten Phase ermittelt und aus der Differenz dieser beiden Spannungen wird die induzierte Spannung berechnet. Im normalen Betrieb sollte die induzierte Spannung gleich Null sein, d.h. die Kommutierung erfolgt synchron zum Nulldurchgang der induzierten Spannung. Die Phasenregelschleife (PLL) der DE 10 2017 117 109 A1 synchronisiert die PWM-Frequenz mit der Motordrehzahl anhand der Spannungsdifferenz als induzierte Spannung und regelt somit die Spannungsdifferenz zum Abtastzeitpunkt auf Null.

Nachteilig bei der sensorlosen Ermittlung der Rotorlage aus der induzierten Spannung ist jedoch, dass der konstruktive Aufbau der Blechpakete des Stators derartiger bürstenloser Motoren Streuflüsse im Stator verursachen kann, welche sich mit der induzierten Spannung überlagern können. Dementsprechend wird nicht nur die induzierte Spannung erfasst, sondern eine elektrische Spannung, welche sich aus der Überlagerung der induzierten Spannung und der Streuflüsse ergibt. Dies kann dazu führen, dass der Einfluss bzw. der Anteil der Streuflüsse derart groß ist, dass die induzierte Spannung nicht mehr ausreichend genau erfasst werden kann, um die Rotorlage verlässlich zu ermitteln. Hierdurch kann ggfs. die Regelung des bürstenlosen Motors instabil werden.

Insbesondere bei kleinen Drehzahlen kann dies der Fall sein, da dann die Anteile der Streuflüsse relativ zur induzierten Spannung besonders groß sind und somit stärker ins Gewicht fallen, d.h. die erfasste Spannung stärker verfälschen.

Der Erfindung stellt sich das Problem, ein Verfahren zum Ansteuern eines mindestens zweiphasigen bürstenlosen Motors der eingangs beschriebenen Art bereitzustellen, so dass die Stabilität des Betriebs, insbesondere des geregelten Betriebs, des bürstenlosen Motors verbessert werden kann. Insbesondere soll die Genauigkeit bzw. die Verlässlichkeit der Ermittlung der Rotorlage, insbesondere sensorlos, erhöht werden. Insbesondere soll der Einfluss der Streuflüsse im Stator auf die Ermittlung der Rotorlage reduziert werden. Dies soll insbesondere für kleinere Drehzahlen des bürstenlosen Motors erfolgen. Dies soll insbesondere möglichst einfach, kostengünstig und bzw. oder flexibel umgesetzt werden können. Zumindest soll eine Alternative zu bekannten derartigen Verfahren geschaffen werden.

Erfindungsgemäß wird dieses Problem durch ein Verfahren mit den Merkmalen des Patentanspruchs 1, durch eine Ansteuerungsvorrichtung mit den Merkmalen des Patentanspruchs 6, durch einen mindestens zweiphasigen bürstenlosen Motor mit den Merkmalen des Patentanspruchs 7 sowie durch ein Haushaltsgerät mit den Merkmalen des Patentanspruchs 8 gelöst. Vorteilhafte Ausgestaltungen und Weiterbildungen der Erfindung ergeben sich aus den nachfolgenden Unteransprüchen.

Somit betrifft die Erfindung ein Verfahren zum Ansteuern eines mindestens zweiphasigen bürstenlosen Motors, vorzugsweise ohne Rotorlagesensor, mit wenigstens den Schritten:

- Bestromen von mindestens einer Phase (bzw. mindestens zwei Phasen bei einem dreiphasigen Motor), wobei die Phasenspannung des Bestromens vorzugsweise mittels PWM-Steuerung eingestellt wird,

- Unterbrechen, zu einem vorbestimmten Zeitpunkt für einen vorbestimmten Zeitraum, des Bestromens aller Phasen,

- Ermitteln der Phasenspannung der nicht-bestromten Phase innerhalb des vorbestimmten Zeitraums,

- Ermitteln einer Sternpunktspannung innerhalb des vorbestimmten Zeitraums,

- Bestimmen der induzierten Spannung der nicht-bestromten Phase während des Unterbrechens aus der Differenz zwischen der ermittelten Phasenspannung und der ermittelten Sternpunktspannung,

- Bestimmen der Rotorlage basierend auf der bestimmten induzierten Spannung der nicht-bestromten Phase und

- Fortsetzen des Bestromens der Phasen basierend auf der bestimmten Rotorlage.

Der Erfindung liegt dabei die Erkenntnis zugrunde, dass zur Vermeidung von Rotorlagesensoren die Lage des Rotors relativ zum Stator auch mittels elektrischer Parameter bestimmt werden kann, welche an den Spulen ermittelt werden. Hierzu kann beispielsweise die induzierte Spannung der nicht-bestromten Phase verwendet werden. Dies kann jedoch, insbesondere bei geringen Drehzahlen des Rotors, durch Streuflüsse in den Spulen des Stators gestört werden.

Erfindungsgemäß sind daher zu dem Zeitpunkt bzw. zu dem Zeitraum, wenn die Phasenspannung und die Sternpunktspannung der nicht-bestromten Phase ermittelt werden, alle Phasen stromlos, so dass keine oder zumindest nur vergleichsweise geringe Streuflüsse in den Spulen des Stators vorhanden sind. Dies kann die Störung der Bestimmung der induzierten Spannung durch die Streuflüsse in den Spulen des Stators vermeiden oder zumindest reduzieren, insbesondere ausreichend, um die Rotorlage aus den elektrischen Parametern mit einer ausreichenden Qualität bestimmen und den bürstenlosen Motor stabil geregelt betreiben zu können.

Die Dauer des vorbestimmten Zeitraums sowie dessen Beginn können basierend auf Berechnungen oder Versuchen derart fest oder veränderbar vorgegeben werden, so dass die zuvor beschriebenen Eigenschaften und Vorteile umgesetzt werden können. Insbesondere kann dies wie weiter unten näher beschrieben werden wird erfolgen.

Gemäß einem Aspekt der Erfindung erfolgt das Unterbrechen des Bestromens aller Phasen zum Zeitpunkt eines Nulldurchgangs der induzierten Spannung der nicht-bestromten Phase. Entsprechend kann ein derartiger Nulldurchgang der induzierten Spannung besser erkannt werden, da zu diesem Zeitpunkt die Störungen der Streuflüsse in den Spulen des Stators reduziert bzw. vermieden werden können. Eine genauere Bestimmung der Nulldurchgänge der induzierten Spannung kann zu einer genaueren Bestimmung der Rotorlage und damit zu einer stabileren Regelung führen.

Gemäß einem weiteren Aspekt der Erfindung erfolgt das Unterbrechen des Bestromens aller Phasen innerhalb des Sektors mittig. Da die Nulldurchgänge der induzierten Spannung üblicherweise in der Mitte der Sektoren liegen, können die Nulldurchgänge entsprechend ohne die Störungen bzw. mit reduzierten Störungen der Streuflüsse ermittelt werden.

Gemäß einem weiteren Aspekt der Erfindung erfolgt das Unterbrechen des Bestromens aller Phasen ausreichend lang, um einen Nulldurchgang der induzierten Spannung der nicht-bestromten Phase zu bestimmen. Hierdurch kann erreicht werden, dass die Nulldurchgänge der induzierten Spannung ohne die Störungen bzw. mit reduzierten Störungen der Streuflüsse ermittelt werden können.

Gemäß einem weiteren Aspekt der Erfindung erfolgt das Bestromen der zwei Phasen mit derselben Spannung wie ohne das Unterbrechen des Bestromens aller Phasen. Man gibt eine Spannungszeitfläche vor, wodurch sich die Leistung ergibt.

Mit anderen Worten wird die elektrische Leistung, welche innerhalb des jeweiligen Sektors der Motorumdrehung zum Antreiben des Rotors seitens der Spulen des Stators aufgebracht werden soll, auch tatsächlich eingesetzt. Da jedoch während des vorbestimmten Zeitraums keine Phasenspannungen vorliegen und somit keine elektrische Leistung auf den Rotor wirkt, wird diese "ausgelassene" elektrische Leistung, vorzugsweise gleichmäßig, auf den übrigen Zeitraum des Sektors verteilt, so dass trotz des erfindungsgemäß unbestromten Zeitraums dieselbe elektrische Leistung wie bisher auf den Rotor wirken und somit dessen Betrieb an sich unverändert bleiben kann.

Die vorliegende Erfindung betrifft auch eine Ansteuerungsvorrichtung zum Ansteuern eines mindestens zweiphasigen bürstenlosen Motors, vorzugsweise ohne Rotorlagesensor, vorzugsweise gemäß eines Verfahrens wie zuvor beschrieben, mit einer Steuerungseinheit, welche ausgebildet ist, mindestens eine Phase des mindestens zweiphasigen bürstenlosen Motors zu bestromen, wobei die Phasenspannung des Bestromens vorzugsweise mittels PWM-Steuerung eingestellt wird, und mit einer Abtasteinrichtung, welche ausgebildet ist, die Phasenspannung der nicht-bestromten Phase und eine Sternpunktspannung zu ermitteln, wobei die Steuerungseinheit ferner ausgebildet ist, das Bestromen aller Phasen zu einem vorbestimmten Zeitpunkt für einen vorbestimmten Zeitraum zu unterbrechen, die induzierte Spannung der nicht-bestromten Phase während des Unterbrechens aus der Differenz zwischen der ermittelten Phasenspannung und der ermittelten Sternpunktspannung zu bestimmen, die Rotorlage basierend auf der bestimmten induzierten Spannung der nicht-bestromten Phase zu bestimmen und das Bestromen der Phasen basierend auf der bestimmten Rotorlage fortzusetzen.

Hierdurch kann eine Ansteuerungsvorrichtung bereitgestellt werden, um die zuvor beschriebenen Aspekte der Erfindung bzw. um das erfindungsgemäße zuvor beschriebene Verfahren bei einem mindestens zweiphasigen bürstenlosen Motor umzusetzen.

Die vorliegende Erfindung betrifft auch einen mindestens zweiphasigen bürstenlosen Motor, vorzugsweise ohne Rotorlagesensor, mit einer Ansteuerungsvorrichtung wie zuvor beschrieben. Hierdurch kann ein mindestens zweiphasiger bürstenloser Motor bereitgestellt werden, um die zuvor beschriebenen Aspekte der Erfindung bzw. um das erfindungsgemäße zuvor beschriebene Verfahren umzusetzen.

Die vorliegende Erfindung betrifft auch ein Haushaltsgerät mit mindestens einem mindestens zweiphasigen bürstenlosen Motor wie zuvor beschrieben. Hierdurch kann ein Haushaltsgerät bereitgestellt werden, um die zuvor beschriebenen Aspekte der Erfindung bzw. um das erfindungsgemäße zuvor beschriebene Verfahren umzusetzen.

Gemäß einem Aspekt der Erfindung weist das Haushaltsgerät einen, vorzugsweise wiederaufladbaren, elektrischen Energiespeicher auf und ist ausgebildet, mittels der gespeicherten elektrischen Energie des elektrischen Energiespeichers betrieben zu werden. Hierdurch kann die vorliegende Erfindung insbesondere bei derartigen Haushaltsgeräten umgesetzt und genutzt werden.

Ein Ausführungsbeispiel der Erfindung ist in den Zeichnungen rein schematisch dargestellt und wird nachfolgend näher beschrieben. Es zeigt

Figur 1 eine Schaltung eines bekannten bürstenlosen Motors;

Figur 2 Verläufe der Phasenspannungen der drei Phasen des bürstenlosen Motors der Figur 1;

Figur 3 Verläufe der pulsweitenmodellierten Ansteuerung der Phasen mit dazugehöriger Sektorzuordnung und Abtastung der induzierten Spannung; und

Figur 4 ein Ablaufdiagramm eines erfindungsgemäßen Verfahrens.

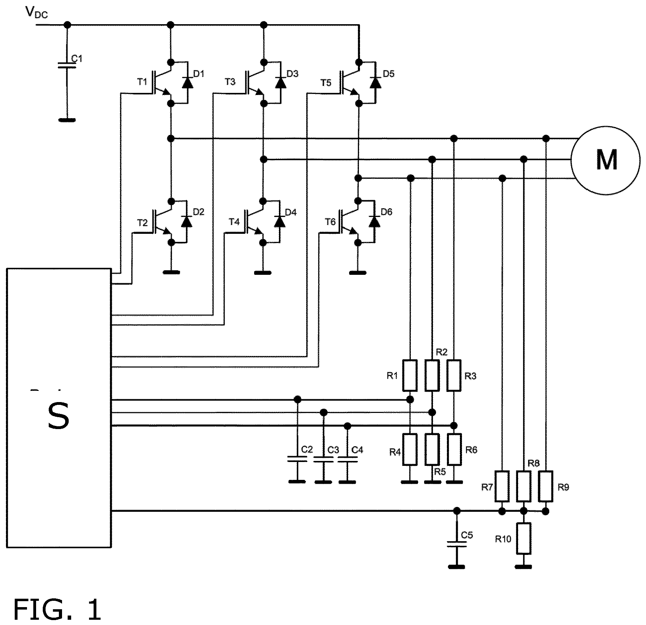

Figur 1 zeigt eine Schaltung eines bekannten bürstenlosen Motors M. Der bürstenlose Motor M, kurz BLDC-Motor M, wird über eine Steuerungseinheit S in Form eines geregelten Frequenzumrichters S angesteuert bzw. betrieben. Aus einer Gleichspannung $V_{DC}$ als Zwischenkreisspannung $V_{DC}$ wird über eine B6-Brücke mit sechs Schaltelementen (MOSFETs oder Transistoren) T1-T6 und sechs Dioden D1-D6 ein dreiphasiges Drehfeld an den BLDC-Motor M gelegt. Hierdurch wird eine Rotation eines Rotors (nicht dargestellt) des BLDC-Motors M im Betrieb bewirkt.

Damit das Drehfeld, welches auf den Stator (nicht dargestellt) des BLDC-Motors M gegeben wird, passend zur Rotorlage ist, muss die Rotorlage bestimmt werden. In der Vergangenheit wurde dies über einen Sensor am BLDC-Motor M getan. Mit dem Aufkommen der sensorlosen Regelung wurde der Sensor durch die Messung elektrischer Größen in Kombination mit einem Software-Motormodell seitens der Steuerungseinheit S ersetzt. Zu diesem Zweck wurden die Phasenspannungen $U_{Phase}$ der drei Phasen U, V, W und auch die Sternpunktspannung gemessen. Die Sternpunktspannung kann entweder am Sternpunkt des BLDC-Motors M gemessen oder über einen "künstlichen Sternpunkt" nachgestellt und gemessen werden. Die Schaltung der ohmschen Widerstände R8-R10 und des Kondensators C5 stellt den künstlichen Sternpunkt dar. Bei einem BLDC-Motor M mit Dreieckschaltung wird üblicherweise nur mit dem künstlichen Sternpunkt gearbeitet.

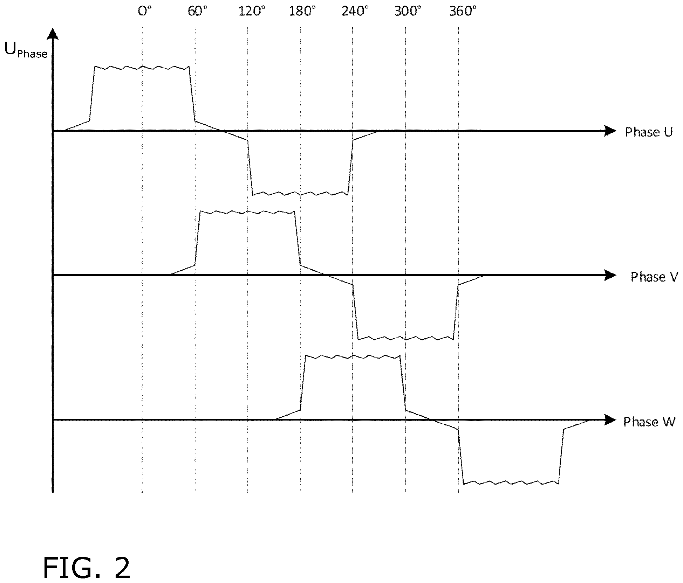

Figur 2 zeigt die Verläufe der Phasenspannungen $U_{Phase}$ der drei Phasen U, V, W des bürstenlosen Motors M der Figur 1. Wie dem zeitlichen Verlauf der Phasenspannung $U_{Phase}$ der Phase U zu entnehmen ist, so wird die Phase U 120° (zwei Sektoren) lang mit einer positiven Spannung aktiv beaufschlagt. Einen Sektor lang ist die Phase U stromlos. In dieser Zeit kann die induzierte Spannung EMK der Phase U gemessen werden, welche auch als elektromotorische Kraft (EMK) bezeichnet wird.

Die Nulllinie bei der Phasenspannung $U_{Phase}$ ist die Sternpunktspannung. Dort, wo die Phasenspannung $U_{Phase}$ die Sternpunktspannung kreuzt, liegt ein sogenannter Nulldurchgang der jeweiligen Phasenspannung $U_{Phase}$ vor. Dieser Zeitpunkt des Nulldurchgangs der Phasenspannung $U_{Phase}$ ist der Moment, wo der Stator und der Rotor zueinander ausgerichtet sind. Auf diese Nulldurchgänge wird gemessen. Somit kann in der Phase U bei einem einpoligen BLDC-Motor M zwei Mal ein Nulldurchgang während einer mechanischen Umdrehung (0° bis 360°) gemessen werden. Misst man in allen drei Phasen U, V, W den Strom, so kann während einer mechanischen Umdrehung sechs Mal die Rotorlage bestimmt werden. Auf diesem Prinzip bauen alle Steuerungseinheiten S von herkömmlichen BLDC-Motoren M auf.

Zur sensorlosen Bestimmung der Rotorlage eines derartigen bekannten BLDC-Motors M kann die Elektromotorische Kraft (EMK) der jeweils unbestromten Phase U, V, W von der Steuerungseinheit S gemessen und ausgewertet werden. Dabei wird zur Bestimmung der EMK die Phasenspannung $U_{Phase}$ der zu dem Messzeitpunkt unbestromten Phase U, V, W gemessen und mit der gleichzeitig gemessenen Sternpunktspannung verglichen, welche mittels eines nachgebildeten Sternpunkts der Steuerungseinheit S ermittelt wird. Wenn das Statorpaket des BLDC-Motors M ideal aufgebaut ist, lässt sich die EMK bzw. der Nulldurchgang der EMK genau bestimmen, da es keine Störeinflüsse gibt.

Aus fertigungstechnischer Sicht sind üblicherweise in das Statorsternpaket sogenannte "Kurzschlussstege" eingebracht, wodurch die einzelnen Pole des Statorsternpakets miteinander elektrisch leitfähig verbunden sind. Durch diese Verbindungen werden in der unbestromten Phase U, V, W Streuflüsse erzeugt, welche die EMK und somit auch die Sternpunktspannung in der Messphase beeinflussen. Die Streuflüsse resultieren dabei aus den anderen beiden Wicklungen des Stators des BLDC-Motors M, da diese weiterhin bestromt werden. Dies wirkt sich insbesondere bei kleinen Drehzahlen aus, da das Verhältnis der durch den Streufluss verursachten Spannung, verursacht durch die Rotation des Rotormagneten, zu der EMK groß ist.

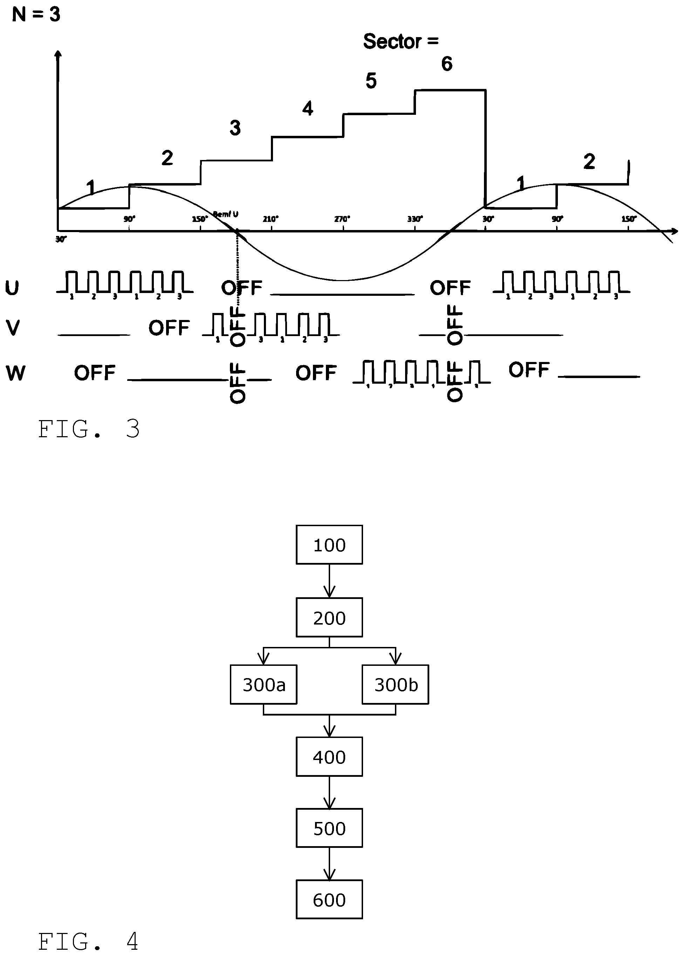

Das Messfenster der induzierten Spannung EMK beträgt bei einem dreiphasigen BLDC-Motor M 60° von einer elektrischen Periode. Die EMK kann somit zwei Mal pro elektrischer Periode, d.h. pro Motorumdrehung, ermittelt bzw. gemessen werden. Dies ist in der Figur 3 dargestellt, indem die Phase U betrachtet wird und die Phase U in Sektor 3 und in Sektor 6 abgeschaltet ist, so dass innerhalb der Sektoren 3 und 6 als Messsektoren die EMK erfasst werden kann. Dabei soll genau der Nulldurchgang der EMK erfasst werden.

Ein Sektor ist dabei in eine ungerade Anzahl von N Unterteilungen unterteilt, abhängig von der momentanen Drehzahl und der PWM-Frequenz. Die Abtastung der EMK erfolgt dabei immer genau in der Mitte des Sektor bei (N pro Sektor + 1)/2 bei N= 3 pro Sektor, d.h. eine Abtastung erfolgt bei N=2; N= 5 pro Sektor, d.h. bei N=3; usw.

Um den Streufluss und die hierdurch verursachte Verfälschung der EMK des BLDC-Motors M zu minimieren, werden erfindungsgemäß in den Messsektoren und in der Unterteilung N der Messung, d.h. in der Sektormitte, die anderen beiden Phasen V, W ebenfalls abgeschaltet, so dass der Strom abnimmt bzw. zu Null wird. Dadurch können keine bzw. nur noch geringe Anteile des Streuflusses auftreten und die EMK ist nur noch von der Rotation des Magneten im Statorpaket abhängig. Die Rotorlage kann genauer als bisher bekannt erfasst werden, was der Stabilität der Regelung zugutekommen kann.

Dies kann erfindungsgemäß umgesetzt werden, indem ein Bestromen 100 von zwei Phasen U, V, W erfolgt, wobei die Phasenspannung $U_{Phase}$ des Bestromens 100 mittels PWM-Steuerung eingestellt wird. Zu einem vorbestimmten Zeitpunkt erfolgt für einen vorbestimmten Zeitraum ein Unterbrechen 200 des Bestromens 100 aller Phasen U, V, W. Innerhalb des vorbestimmten Zeitraums erfolgt ein Ermitteln 300a der Phasenspannung $U_{Phase}$ der nicht-bestromten Phase U, V, W und ein Ermitteln 300b einer Sternpunktspannung. Es erfolgt ein Bestimmen 400 der EMK der nicht-bestromten Phase U, V, W während des Unterbrechens 200 aus der Differenz zwischen der ermittelten Phasenspannung $U_{Phase}$ und der ermittelten Sternpunktspannung. Es erfolgt ein Bestimmen 500 der Rotorlage basierend auf der bestimmten EMK der nicht-bestromten Phase U, V, W und ein Fortsetzen 600 des Bestromens 100 der Phasen U, V, W basierend auf der bestimmten Rotorlage.

Durch das erfindungsgemäße Abschalten der beiden Phasen V, W zum Messzeitpunkt wird jedoch die Spannungszeitfläche an den Motorphasen verringert. Um wieder die gleiche Spannungszeitfläche zu bekommen, müssen die anderen Pulse in dem Sektor breiter werden. Die Pulsbreite für den "Abtastsektor" kann mit folgender Formel bestimmt werden:

$$Ton_{neu} = Ton_{alt}\frac{N}{N-1}$$

Dabei ist $Ton_{alt}$ die Einschaltzeit, die von einem übergeordneten Regler der Steuerungseinheit S für einen Puls im Sektor berechnet worden ist. Während eines Sektors sind die Pulsbreiten üblicherweise konstant. Die Pulsbreite $Ton_{neu}$ muss folglich um den Anteil des ausgelassenen Pulses für die Messung vergrößert werden. Somit wird die fehlende Spannungsfläche, welche aus dem Abschalten der Phasen U während einer oder mehreren PWM-Perioden als Messphase resultiert, kompensiert.

**Bezugszeichenliste (Bestandteil der Beschreibung)**

| | |
|---|---|
| C1-C5 | Kondensatoren |
| D1-D6 | Dioden der B6-Brücke |
| T1-T6 | Transistoren der B6-Brücke |
| R1-R10 | ohmsche Widerstände |
| $V_{DC}$ | Gleichspannung |
| | |
| N | Anzahl der Unterteilungen der Sektoren |
| OFF | Ausschaltzeitpunkt bzw. -zeitraum der Bestromungen |
| | |
| U | Phase |
| V | Phase |
| W | Phase |
| | |
| $U_{Phase}$ | Phasenspannung; Zwischenkreisspannung |
| EMK | induzierte Spannung; elektromotorische Kraft |

M   (dreiphasiger) bürstenloser Motor; BLDC-Motor

S   Steuerungseinheit; Rechner; geregelter Frequenzumrichter

100   Bestromen von zwei Phasen U, V, W

200   Unterbrechen des Bestromens 100 aller Phasen U, V, W

300a   Ermitteln der Phasenspannung $U_{Phase}$ der nicht-bestromten Phase U, V, W

300b   Ermitteln einer Sternpunktspannung

400   Bestimmen der induzierten Spannung EMK der nicht-bestromten Phase U, V, W

500   Bestimmen der Rotorlage basierend auf der bestimmten EMK der nicht-bestromten Phase U, V, W

600   Fortsetzen des Bestromens 100 der Phasen U, V, W basierend auf der bestimmten Rotorlage

**Patentansprüche**

1. Verfahren zum Ansteuern eines mindestens zweiphasigen bürstenlosen Motors (M), vorzugsweise ohne Rotorlagesensor, mit wenigstens den Schritten:

   • Bestromen (100) von mindestens einer Phase (U, V, W), wobei die Phasenspannung ($U_{Phase}$) des Bestromens (100) vorzugsweise mittels PWM-Steuerung eingestellt wird,
   • Unterbrechen (200), zu einem vorbestimmten Zeitpunkt für einen vorbestimmten Zeitraum, des Bestromens (100) aller Phasen (U, V, W),
   • Ermitteln (300a) der Phasenspannung ($U_{Phase}$) der nicht-bestromten Phase (U, V, W) innerhalb des vorbestimmten Zeitraums,
   • Ermitteln (300b) einer Sternpunktspannung innerhalb des vorbestimmten Zeitraums,
   • Bestimmen (400) der Elektromotorischen Kraft (EMK) der nicht-bestromten Phase (U, V, W) während des Unterbrechens (200) aus der Differenz zwischen der ermittelten Phasenspannung ($U_{Phase}$) und der ermittelten Sternpunktspannung,
   • Bestimmen (500) der Rotorlage basierend auf der bestimmten Elektromotorischen Kraft (EMK) der nicht-bestromten Phase (U, V, W), und
   • Fortsetzen (600) des Bestromens (100) der Phasen (U, V, W) basierend auf der bestimmten Rotorlage.

2. Verfahren nach Anspruch 1, **dadurch gekennzeichnet, dass**
   das Unterbrechen (200) des Bestromens (100) aller Phasen (U, V, W) zum Zeitpunkt eines Nulldurchgangs der Elektromotorischen Kraft (EMK) der nicht-bestromten Phase (U, V, W) erfolgt.

3. Verfahren nach Anspruch 1 oder 2, **dadurch gekennzeichnet, dass**
   das Unterbrechen (200) des Bestromens (100) aller Phasen (U, V, W) innerhalb des Sektors mittig erfolgt.

4. Verfahren nach einem der vorangehenden Ansprüche, **dadurch gekennzeichnet, dass**
   das Unterbrechen (200) des Bestromens (100) aller Phasen (U, V, W) ausreichend lang erfolgt, um einen Nulldurchgang der Elektromotorischen Kraft (EMK) der nicht-bestromten Phase (U, V, W) zu bestimmen.

5. Verfahren nach einem der vorangehenden Ansprüche, **dadurch gekennzeichnet, dass**
   das Bestromen (100) der mindestens eine Phase (U, V, W) mit derselben Spannung wie ohne das Unterbrechen (200) des Bestromens (100) aller Phasen (U, V, W) erfolgt.

6. Ansteuerungsvorrichtung zum Ansteuern eines mindestens zweiphasigen bürstenlosen Motors (M), vorzugsweise ohne Rotorlagesensor, vorzugsweise gemäß einem Verfahren nach einem der vorangehenden Ansprüche,

   mit einer Steuerungseinheit (S), welche ausgebildet ist, zwei Phasen (U, V, W) des mindestens zweiphasigen bürstenlosen Motors (M) zu bestromen, wobei die Phasenspannung ($U_{Phase}$) des Bestromens (100) vorzugsweise mittels PWM-Steuerung eingestellt wird, und
   mit einer Abtasteinrichtung, welche ausgebildet ist, die Phasenspannung ($U_{Phase}$) der nicht-bestromten Phase (U, V, W) und eine Sternpunktspannung zu ermitteln,
   wobei die Steuerungseinheit (S) ferner ausgebildet ist, das Bestromen (100) aller Phasen (U, V, W) zu einem vorbestimmten Zeitpunkt für einen vorbestimmten Zeitraum zu unterbrechen, die induzierte Spannung (EMK) der nicht-bestromten Phase (U, V, W) während des Unterbrechens (200) aus der Differenz zwischen der ermittelten Phasenspannung ($U_{Phase}$) und der ermittelten Sternpunktspannung zu bestimmen, die Rotorlage basierend auf der bestimmten induzierten Spannung (EMK) der nicht-bestromten Phase (U, V, W) zu bestimmen und das Bestromen (100) der Phasen (U, V, W) basierend auf der bestimmten Rotorlage fortzusetzen.

7. Mindestens dreiphasiger bürstenloser Motor (M), vorzugsweise ohne Rotorlagesensor, mit einer Ansteuerungsvorrichtung nach Anspruch 6.

8. Haushaltsgerät mit mindestens einem mindestens zweiphasigen bürstenlosen Motor (M) nach Anspruch 7.

9. Haushaltsgerät nach Anspruch 8, **dadurch gekennzeichnet, dass**
das Haushaltsgerät einen, vorzugsweise wiederaufladbaren, elektrischen Energiespeicher aufweist und ausgebildet ist, mittels der gespeicherten elektrischen Energie des elektrischen Energiespeichers betrieben zu werden.

FIG. 1

FIG. 2

FIG. 3

FIG. 4

Europäisches
Patentamt

European
Patent Office

Office européen
des brevets

**EUROPÄISCHER RECHERCHENBERICHT**

**Nummer der Anmeldung**

**EP 22 15 2339**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 100 23 370 A1 (MULFINGEN ELEKTROBAU EBM [DE]) 22. November 2001 (2001-11-22) | 1-7 | INV. H02P6/182 |
| Y | * Absätze [0021], [0024] * | 8,9 | |
| | * Absatz [0042]; Anspruch 14; Abbildung 7 * | | |
| | * Absatz [0011] * | | |
| | * Absatz [0026]; Abbildung 2 * | | |
| | ----- | | |
| Y | EP 2 328 266 A1 (MIELE & CIE [DE]) 1. Juni 2011 (2011-06-01) * Absatz [0001]; Abbildung 2 * | 8,9 | |
| | ----- | | |

**RECHERCHIERTE SACHGEBIETE (IPC)**

H02P

Der vorliegende Recherchenbericht wurde für alle Patentansprüche erstellt

| Recherchenort | Abschlußdatum der Recherche | Prüfer |
|---|---|---|
| **München** | **16. Mai 2022** | **Schürle, Patrick** |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 15 2339

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-05-2022

| Im Recherchenbericht angeführtes Patentdokument | Datum der Veröffentlichung | Mitglied(er) der Patentfamilie | | Datum der Veröffentlichung |
|---|---|---|---|---|
| DE 10023370 A1 | 22-11-2001 | AT | 272267 T | 15-08-2004 |
| | | CN | 1324142 A | 28-11-2001 |
| | | DE | 10023370 A1 | 22-11-2001 |
| | | EP | 1154555 A2 | 14-11-2001 |
| | | ES | 2225340 T3 | 16-03-2005 |
| | | MY | 124922 A | 31-07-2006 |
| | | TW | 529237 B | 21-04-2003 |
| | | US | 2002014870 A1 | 07-02-2002 |
| EP 2328266 A1 | 01-06-2011 | EP | 2328266 A1 | 01-06-2011 |
| | | ES | 2613052 T3 | 22-05-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017117109 A1